# EUROPEAN PATENT APPLICATION

(11) **EP 3 026 951 A2**
(43) Date of publication of application: **01.06.2016**
(21) Application number: 15196601.7
(22) Date of filing: 26.11.2015
(51) Int. Cl.: H04W 24/02, H04L 12/24

(54) **USER EXPERIENCE POLICY MANAGEMENT AND OPTIMISATION OF TELECOMMUNICATIONS NETWORKS**

(30) Priority: 28.11.2014 GB 201421226
(71) Applicant: Vodafone IP Licensing Limited, The Connection Newbury Berkshire RG14 2FN (GB)
(72) Inventor: Turk, Mr John, London, Paddington Central W2 6BY (GB); Scully, Neil, London, Paddington Central W2 6BY (GB); LU, Zhanhong, London, W2 6BY (GB)
(74) Representative: Boult Wade Tennant

(57) **Abstract**

Methods and apparatus are provided for management, control and optimisation of a telecommunications network based on user experience policies that define user experience for one or more service(s) provided over a telecommunications network including one or more network nodes. The methods and apparatus make user experience measurements in the telecommunications network to ensure that the user experience policies are being met for user equipment and corresponding users in the network that use the one or more service(s). The methods and apparatus automatically changes certain parameters or adjusts the one or more network nodes in the network using one or more network performance mechanisms if the user experience policies associated with one or more users are not being met. The network continues to monitor the user experience measurements and, if necessary, change or adjust the network node(s), to ensure that user experience policies continue to be met.

## Description

### Background

Management and control of telecommunications networks is an ongoing problem. Service providers and infrastructure providers are constantly looking for ways to more efficiently use network resources, improve performance, balance network load, reduce risk of malfunction, and/or meet service level agreements.

With wireless communication networks becoming ever more complex, network planning needs to be made easier and smarter: planning, configuration, management, optimisation and healing need to be automated to bring improvements. With revenue per measured Mbit decreasing, operators need to reduce operational expenditures. As a result, the concept of the Self-Organising Network (SON) is growing in interest and use.

SON is an intelligent platform that can automatically optimise a wireless communication network, for example, telecommunications networks such as second generation (2G), 3G, 4G and beyond-type networks and/or other wireless communication networks such as the Worldwide Interoperability for Microwave Access (WiMAX), wireless local area networks (WLAN) such as those based on the Institute of Electrical and Electronics Engineers' (IEEE) 802.11 standards e.g. Wi-Fi networks. The Third Generation Partnership Project (3GPP) has introduced the SON concept into Release 8, and defined a set of use cases that govern a network including the planning, deployment, optimisation and maintenance activities. There are three main areas in which the self-organising network operates, as follows. Self-configuration, also called "plug and play", defines and implements the network parameters automatically, requiring little manual intervention in the network configuration process, and enables more reliable and efficient macro and small cell rollout. Self-optimisation adapts parameters to their optimal value based on cell performance statistics, and replaces repetitive routine operations with automation so that high operational efficiency can be achieved. Self-healing detects network outage automatically and quickly implements revised parameters to compensate, enables the impact on customers due to a failed cell to be minimised.

Although SON can alleviate some of the problems with optimising 2G, 3G, 4G and beyond type networks, SON is actually one of many tools or network performance mechanisms available to service and infrastructure providers for optimising a telecommunications network. What is often forgotten during optimisation of a telecommunications network is the end user experience in the network.

Over the past few years, there has been considerable interest in researching the effects of end user experience on the structure of telecommunications networks. However, incorporating end user experience into the management, control and optimisation of telecommunication networks is an ongoing problem.

The embodiments described below are not limited to implementations which solve any or all of the disadvantages of known telecommunications network control systems.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Methods and apparatus are provided for management, control and optimisation of a telecommunications network based on user experience policies that define user experience for one or more service(s) provided over a telecommunications network including one or more network nodes. The methods and apparatus make user experience measurements in the telecommunications network to ensure that the user experience policies are being met for user equipment and corresponding users in the network that use the one or more service(s). The methods and apparatus automatically changes certain parameters or adjusts the one or more network nodes in the network using one or more network performance mechanisms if the user experience policies associated with one or more users are not being met. The network continues to monitor the user experience measurements and, if necessary, change or adjust the network node(s), to ensure that user experience policies continue to be met.

According to an aspect of the invention there is provided a method for controlling the performance of a telecommunication network, the telecommunication network comprising a plurality of network nodes and a plurality of UEs associated with users using a service over the telecommunication network, the method comprising:
retrieving user experience measurements associated with users of the service from one or more network nodes;
comparing the user experience measurements with user experience policies associated with users of the service to determine a set of users experiencing a degradation in the service;
selecting one or more network performance mechanisms for adjusting at least one network node associated with providing said service to at least one user of the set of users; and
adjusting said at least one network node using the one or more selected network performance mechanisms based on the user experience policies, the user experience measurements and the degradation in the service for said at least one user.

In an example, the method comprises selecting the one or more network performance mechanisms from at least one from the group of: a radio resource management, RRM, mechanism; a self-organising network, SON, mechanism; and a service optimization, SO, mechanism associated with the service.

In an example, the method comprises retrieving data representative of at least one user experience policy associated with at least one user of the telecommunication network.

In an example, the method comprises mapping the user experience policies for each user into data representative of rules for use in the comparison and adjustment of the at least one network node.

In an example, the method comprises comparing the user experience measurements with user experience policies associated with users of the service further comprises applying the user experience measurements for each user to the rules associated with the user experience policy to determine whether each user experiences degradation in the service.

In an example, the method comprises determining whether a user experiences a degradation in the service further comprises at least one from the group of: detecting whether the user is experiencing a degradation in the service; and predicting whether the user will experience degradation in the service.

In an example, the step of selecting one or more network performance mechanisms further comprises: determining the network performance mechanisms supported by said at least one network node; and selecting one or more supported network performance mechanisms for adjusting said at least one network node.

In an example, the at least one network node includes a base station node supporting at least one network performance mechanism from the group of: a RRM mechanism; a SON mechanism; and a SO mechanism associated with the service; and wherein the steps of selecting and adjusting the at least one network node further comprising: selecting the RRM mechanism for adjusting the at least one network node; selecting the SON mechanism after adjusting the at least one network node based on the RRM mechanism, for further adjusting the at least one network node; and selecting the SO mechanism after further adjusting the at least one network node.

In an example, the at least one network node includes a core network node supporting at least one network performance mechanism of a SON mechanism and a SO mechanism associated with the service, and wherein the steps of selecting and adjusting the at least one network node further comprises selecting the SON mechanism for adjusting the at least one network node, and selecting the SO mechanism after using the SON mechanism for adjusting the at least one network node.

In an example, the at least one network node includes a set of network nodes associated with providing the service to the set of users, wherein the set of network nodes are adjusted according to the one or more network performance mechanisms, the user experience policies, and user experience measurements.

In an example, the step of comparing further comprises prioritizing the set of users based on the level of degradation experienced by each of the users in the set of users; and the step of adjusting further comprises adjusting at least one network node based on the prioritized set of users.

In an example, the method comprises prioritizing the set of users further comprises determining the priority for each user in the set of users based on the user experience policies.

In an example, the method comprises selecting the one or more network performance mechanisms further comprises selecting the one or more network performance mechanisms based on the prioritized set of users.

In an example, the at least one network node further comprises adjusting the at least one network node using the one or more selected network performance mechanisms based on the prioritized set of users.

Another aspect of the invention there is provided a method for managing and controlling the performance of a telecommunication network, the telecommunication network comprising a plurality of network nodes and a plurality of UEs associated with users using a service over the telecommunication network, the method comprising:
receiving and storing user experience policies associated with users of the service;
determining one or more user experience policy sets for use by one or more network nodes, wherein each policy set comprises one or more policies from the user experience policies; and
forwarding at least one each user experience policy set to at least one corresponding network node for use in adjusting, by one or more network performance mechanisms, one or more network nodes of the network based on user experience measurements associated with the user experience policy set.

In an example, determining the one or more user experience policy sets further comprises: interpreting each policy of the user experience policies to determine the network node(s) to which said each policy is applicable; and mapping said each policy to a corresponding user experience policy set corresponding to the determined network node(s).

In an example, mapping said each policy further includes: translating said each policy to data representative of network performance requirements associated with the determined network node(s) for use by determined network node(s) in applying said each policy; and storing in each policy set the translated policy.

In an example, the said at least one corresponding network node implements the method for controlling the performance of a telecommunication network as described herein for use in adjusting, by one or more network performance mechanisms, one or more network nodes of the network based on user experience measurements associated with the user experience policy set.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

In other aspects of the invention, there is provided a computer readable medium comprising program code stored thereon, which when executed on a processor, causes the processor to perform one or more of the methods as described herein.

In a further aspect of the invention there is provided a policy node comprising a processor unit, a storage unit, a receiver and transmitter unit, the processor unit coupled to the storage unit, receiver and transmitter units, where the processor unit, storage unit, receiver and transmitter units are configured to perform one or more of the method(s) as described herein.

In yet a further aspect of the invention, there is provided a network node comprising a processor unit, a storage unit, a receiver and transmitter unit, the processor unit coupled to the storage unit, receiver and transmitter units, wherein the processor unit, storage unit, receiver and transmitter units are configured to perform one or more of the method(s) as described herein.

Other aspects of the invention provide a telecommunications network comprising a network node as described herein.

In another example, the telecommunications network may further comprise a policy node as described herein.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1a is a schematic diagram of a telecommunications network with centralised network optimisation functionality;
Figure 1b is a schematic diagram of the telecommunications network of Figure 1a with distributed network optimisation functionality;
Figure 2a is a flow diagram of a method at a network optimisation mechanism;
Figure 2b is a flow diagram of a method for managing/controlling the network optimisation mechanism(s);
Figure 3 is a schematic diagram of an example network optimisation functionality or mechanism;
Figure 4a is a schematic diagram of another telecommunications network including centralised and/or distributed network optimisation functionality;
Figure 4b is a schematic diagram of an example of coordinating the optimisation of the telecommunications network of figure 4a; and
Figure 5 is a schematic diagram of a computing device for implementing one or more aspects or functions of the invention.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The inventors have found that it is possible to improve management, control and optimisation of a telecommunications network such that end user experience and quality of service requirements for services provided to users over the network are met in a more efficient manner for different users and their user equipment devices (UEs). A UE may comprise or represent any portable computing device for communications. Examples of UEs that may be used in certain embodiments of the described apparatus, methods and systems may be wired or wireless devices such as mobile devices, mobile phones, terminals, smart phones, portable computing devices such as laptops, handheld devices, tablets, tablet computers, netbooks, phablets, personal digital assistants, music players, and other computing devices capable of wired or wireless communications.

Some services need to meet stringent quality of service requirements over a telecommunications network otherwise the user experience of the network is poor, which can reflect poorly on the service providers and operators of the telecommunication network. Such services are typically real-time services such as content streaming services. There has been an explosion in the number of content items being streamed over telecommunication networks to UEs and viewed by users while on the go.

Streaming is known as communicating a content item to a UE for playback to the user while the content item is being received by the UE. During streaming the content item is being constantly received by the UE and may be presented to the user by a content player while being delivered over the network by a content provider or source. A content item may comprise or represent any data representative of digital content for playback on a content player to a user.

Examples of content items that may be used in certain embodiments of the described apparatus, methods and system may be any data representative of clips, videos, audio and/or other digital content or multimedia content that may be accessed from a plurality of content sources, content delivery networks (CDNs) or providers (e.g. web servers such as YouTube (RTM), Netflix (RTM), LoveFilm (RTM), IMDB (RTM), Vimeo (RTM), Daily Motion (RTM), Spotify (RTM), and other streaming content servers, mobile devices, or sites etc.).

The data of the content item may be delivered as a bit stream from the content provider (e.g. a streaming server) to the UE (e.g. a streaming client) using a transport layer protocol. The transport layer protocol may comprise or represent any transport protocol that is responsible for delivering data (e.g. data representative of a content item) to the appropriate application process on the mobile device.

Examples of transport protocols that may be used in certain embodiments of the invention may include, but are not limited to, datagram protocols (e.g. User Datagram Protocol (UDP)), Transmission Control Protocol (TCP), Real-time Streaming Protocol (RTSP), Real-time Transport Protocol (RTP), Real-time Transport Control Protocol (RTCP), Hypertext Transfer Protocol (HTTP) Live Streaming (HLS), HTTP Dynamic Streaming (HDS), MPEG-Dynamic Adaptive Streaming over HTTP (DASH) and other adaptive bitrate streaming protocols over HTTP, peer-to-peer protocols and any other suitable transport protocol for controlling delivery of a content item between a content source/or other mobile device over a communication network and the mobile device.

In particular, providing a high level of user experience for services such as streaming content services over a telecommunications network is problematic because the content streaming and playback of the content item on the UE may 'stall' due to poor network conditions or performance (e.g. load, lack of network resources, capacity, lack of coverage, poor radio conditions, etc.). This strongly contributes to a bad user experience and reflects badly on the network operator. A stall occurs when a content item (e.g. streaming a video from YouTube) stops playing for a number of seconds while the user is viewing the content item on the UE.

The inventors have found that although there are a number of approaches that may be used to improve network performance and user experience, the current approaches do not adequately take the user experience into account. The current approaches include various network performance mechanisms hardware and/or software features that can be used to improve network performance and user experience some of which include network expansion, SON, radio resource management (RRM), and service adaptation or optimisation (SO).

Network expansion can improve network performance by deploying additional macro cell sites, or adding small or micro cell sites within macro cell sites. SON technology can automatically optimise parameter settings in the network with the aim of improving the networks performance. For example, by load balancing to relieve congested cells. RRM includes algorithms that manage network resources, e.g. base station network resources, which can be optimised for performance. For example, a scheduler can be used to ensure that available resources are efficiently assigned. Service adaptation or SO may include adjusting the quality of service to optimise performance, e.g. reducing the quality of a video streaming service by lowering the resolution if the data rate is not high enough to handle a higher resolution streaming. It is evident that most of these approaches such as SON and RRM do not adequately take into account user experience such that there is a lack of functionality in the network taking individual user quality and experiences into account when optimising the network. The solution described herein provides a mechanism for taking user experience requirements as input and integrating these approaches to automatically optimise the network to improve individual user experiences.

In the examples described herein, one or more network performance mechanisms (e.g. RRM mechanism, a SON mechanism, and SO mechanism) are used in the management, control and optimisation of a telecommunications network to meet user experience policies for services provided to users. The user experience policies may be operator defined in which one or more or a combination of one or more network performance mechanisms such as SON, RRM and SO mechanisms are applied to optimise the telecommunication network according to the user experience policies such that users, where possible, will experience services that have a user experience and quality of service pre-set by the operator.

The operator configures the user experience policies to define what the network should deliver when providing services to the user. The telecommunications network includes functionality to make user experience measurements for comparison with the user experience policies to see if these are being met, and if not, the telecommunications network includes functionality to automatically change, using one or more or a combination of one or more network performance mechanisms, certain parameters/resources of the network until the user experience policies for the users are met.

The user experience policies may include data representative of one or more various different policies associated with one or more services. The policies may include data representative of definitions, rules, conditions or criteria associated with performance thresholds such as certain quality of service thresholds, minimum network performance thresholds. The policies may further include data representative of which trade-offs should apply to the rules, conditions and/or criteria because it may not be possible to meet all rules, conditions or criteria simultaneously. The user experience policies may be entered by an operator via a graphical user interface and stored in any suitable format, for example but not limited to, extensible Markup Language (XML) or any other policy language or format.

For example, the services provided to users over the telecommunications network may be time critical services such as content streaming (e.g. video streaming or audio streaming), such that the user experience policies for a content streaming service may include policies associated with the number of content stalls allowed per content streaming session, policies associated with maximising or minimising the number of users using the service, policies associated with maximising the number of users with no content stalls, policies associated with maximising the number of users with less than N stalls, where N>0 (e.g. N=2). Policies associated with dropping users having more than M stalls, where M>0 (e.g. M>2). Policies associated with maximising the number of users with less than N stalls per time period (e.g. the time period may be measured in seconds, minutes, hours), where N>0 (e.g. N=2). Policies associated with dropping users having more than M stalls per time period (e.g. the time period may be measured in seconds, minutes, hours), where M>0 (e.g. M>1). The number of stalls may be averaged or may be based on the frequency of stalls.

The user experience policies may further include policies associated with quality of the content item being streamed, e.g. video or audio resolution of the content item, number of errors allowed to be accepted during transmission over the network, a quality threshold level above which degradation is allowed (i.e. allow users with best experience to be degraded). Other policies may further include indication of whether quality of the content item or number of stalls during playback is more important, policies on start time of playback of the content item, or on the stalling duration of the content item.

In addition, the user experience policies may further include policies defined relating to non-content streaming services, for example, policies prioritising content streaming services over non-content streaming services or non-time critical services (e.g. a good user experience is desired for video streaming, which is more important and time critical than for web-browsing services and traffic).

Although several example policies have been described that may be included in the user experience policies, it is to be appreciated by the skilled person that any other policy that may impact on the user experience for a service may be included in the user experience policies.

The user experience measurements may be used to measure the necessary variables, factors or performance metrics associated with the user experience policies. The user experience measurements can be direct measurements of user experience such as, by way of example only, directly measuring the number of stalls for a video for all users, or measuring user throughput, signal strength, which may be compared with the policies. Some mapping may be required to estimate the user experience based on the user experience measurements. For example, if throughput < x Mbps then the throughput measurement can be used to estimate that the user will experience stalls. This may allow comparison or application of the user experience polices with the user experience measurements for determining whether the user experience policies are being met for one or more services being provided to one or more users over the network.

In addition, by way of example only, the user experience policies may be translated into a form that allows comparison with the user experience measurements to determine for which users of the service and where the network may not be meeting the expected user experience policies. Translation of the user experience policies, which are typically high-level policies, may include mapping one or more sets of policies from the user experience policies to specific functions (e.g. SON, RRM or SO) or specific network nodes supporting one or more network performance mechanism functions. For example, in a list of 10 user experience policies, 5 may be sent to SON in an network node such as an eNodeB (eNB) in an LTE network (eNB), 2 to SON in the core network, and 3 may be sent to both SON and RRM in an eNB).

When policies are sent to these individual functions, network nodes or network performance mechanism functions, an indicator may be included on whether the network performance mechanism function is the sole recipient of that policy, or whether other network performance mechanisms are also implementing that policy. If multiple network performance mechanisms are aiming to implement the same policy, then this will impact their behaviour when optimising the performance of the network for users of the service in which the user experience policies are not being met.

In another example, for user experience policies associated with a content streaming service, the user experience measurements may include data representative of the number of stalls for each user that is using the content streaming service, time period over which stalls have occurred, resolution or quality of the content item being streamed, bandwidth or network resources being used by each user of the service, stall duration or any other data representative of the performance of the service provided to each user and associated with the user experience policies.

The telecommunications network includes functionality to determine whether the user experience policies are being met for a service based on the user experience measurements for the service for each user. If the user experience policies for the service are not being met for one or more users or a set of users, then the telecommunications network includes functionality to automatically change the performance of the network associated with services provided to those one or more users or set of users using one or more or a combination of one or more network performance mechanisms such as SON, RRM and SO mechanisms. The user experience policies and/or user experience measurements may be input and used by the network performance mechanisms for attempting to optimise the performance of the telecommunication network for the service being delivered to the one or more users or set of users. This will enable the one or more users or the set of users to experience services that have a user experience and quality of service pre-set by the operator.

For example, a policy distribution/translation function in the network may distribute from the user experience policies one or more sets of policies for input one or more network performance mechanism in the network. On receiving a set of user experience policies, the network performance mechanism may also receive relevant user experience measurements that may be measured locally (e.g. measurement in eNB used by SON mechanism in a network node such as an eNB or a core network node), or measured elsewhere and transferred over an interface (e.g. measured in eNB and transferred over interface to a SON mechanism in the network manager, element manager, or core network) for use in optimising the network performance for users determined to not be receiving the expected user experience as defined by the user experience policies for that service.

A radio resource management (RRM) mechanism comprises computer implemented functionality for executing adaptive adjustment of radio network resources for one or more network nodes. For example, RRM mechanisms can be configured to automatically and adaptively adjust radio access network parameters that are used to adjust the radio resources allocated to UEs, traffic load, user positions, user mobility, quality of service requirements, base station density, etc. Some RRM mechanisms are centralised where several network nodes (e.g. base stations and access points) are controlled by a controlling network node (e.g. a Radio Network Controller (RNC)). Other RRM mechanisms can be distributed as autonomous algorithms among network nodes and/or UEs for performing localised adjustments, or coordinated by exchanging information among these nodes and/or devices.

Examples of RRM mechanisms may include computer implemented functionality for dynamically managing radio resources with the aim of optimally using the available resources, by way of example, executing an optimisation algorithm for managing the radio resources of one or more network nodes. RRM mechanisms may include, by way of example only but are not limited to, one or more scheduling algorithms, radio resource allocation and scheduling algorithms, power control algorithms, precoding algorithms, link adaptation algorithms, dynamic channel allocation (DCA) or dynamic frequency selection (DFS) algorithms, traffic adaptive handover criteria, frequency re-use partitioning, adaptive filtering, interference cancellation and diversity schemes such as, by way of example only, soft handover, beamforming, multi-input multiple-output communications, bandwidth allocation, resource reservation and allocation, admission and congestion control, multiple access schemes, and queuing schemes.

A self-organising network (SON) engine or mechanism (centralised or distributed) comprises computer-implemented functionality for executing an optimisation algorithm which uses efficient methods to analyse possible values of parameters of a telecommunications network (such as a 2G, 3G, 4G mobile radio access network), to find solutions which are optimal according to one or more assessment metrics. For example, the parameters include but are not limited to hand-over parameters, antenna tilt parameters, pilot transmission power parameters, common channel transmission power, data channel transmit power, automatic neighbour relation parameters, and others. The assessment metric may comprise thresholds and or criteria to be met by telecommunications network performance data. Examples of telecommunications network performance data include but are not limited to key performance indicators (KPIs) such as dropped call rate, call setup failure rate. Although current SON solutions only considers KPIs, SON solutions may be further modified in the future to include other examples of telecommunications network performance data such as, by way of example, service quality indicators such as user throughput, mean opinion score, delay, jitter, video resolution, video delay, number of video stalls, and frequency of video stalls. Self-organising network engine functionality may be centralised or distributed through a telecommunications network. Hybrid deployments using a mix of centralised and distributed SON technology may also be used. Conventional SON technology has been codified in 3GPP release 8 and other specifications.

In centralised SON, the SON mechanism may interface with the telecommunications network via an operation support system (OSS). The OSS comprises computer-implemented functionality for interfacing the SON mechanism with the telecommunications infrastructure, which may include different types of telecommunications network nodes such as, by way of example, base stations, switches, routers, core network nodes, radio access network, element nodes, policy nodes and other network nodes of the network etc. The OSS can be configured to receive data from the telecommunications network such as performance statistics and other data and may compute higher level statistics from the performance data it receives, for example, by aggregating data after filtering out outliers. The OSS may probe the telecommunications network to obtain the performance data in some examples. The OSS comprises interfaces for interoperating with various different types of telecommunications network node, such as base stations and/or other network nodes in the telecommunications infrastructure. In this way the OSS is able to issue commands to telecommunications network nodes in order to control the behaviour of those network nodes. For distributed SON functionality, there may be SON mechanisms implemented in more than one network node in the network such as base stations, eNBs, network manager nodes, network element nodes. Hybrid approaches may be used to implement both centralised SON functionality and distributed SON functionality throughout the network.

The Third Generation Partnership Project (3GPP) introduced into Release 8 the concept of a SON, an intelligent platform that automatically optimises 2G, 3G, 4G and beyond networks, and defines a set of use cases that govern a network including the planning, deployment, optimisation and maintenance activities. 3GPP does not specify how to implement these use cases: SON vendors may implement the use cases using their own proprietary algorithms. Three key use cases so far considered by 3GPP include Automatic Neighbour Relations (ANR), Coverage and Capacity Optimisation (CCO), Mobility Load Balancing (MLB), Mobility Robustness Optimisation (MRO).

Automatic Neighbour Relations (ANR) is designed to optimise the neighbour relations by adding missing neighbour relations, deleting redundant neighbour relations, and prioritising neighbour relations, in order to reduce the number of user calls dropped due to missing or incorrect neighbour relations. Correct and up-to-date neighbouring lists will increase the number of successful handovers and minimise the number of dropped calls.

Coverage and Capacity Optimisation (CCO) aims to optimise parameters relating to transmission power, antenna tilting and handover in order to balance the network coverage and capacity. Specific examples of parameters to be optimised during CCO include antenna remote electronic tilt (RET), primary CPICH (Common Pilot Channel) power, BCH (Broadcast Channel) power, AICH (Acquisition Indication Channel) power, PCH (Paging Channel) power, PICH (Paging Indication Channel) power, idle mode inter-RAT reselect threshold, idle mode inter-frequency reselect threshold, inter-RAT handover threshold, intra-frequency mobility parameters, and HSDPA (High Speed Downlink Packet Access) power.

Mobility Load Balancing (MLB) seeks to optimise the pilot transmission power, common channels power, and handover parameters to balance traffic or network load between different sites, different frequency layers, and different Radio Access Technologies (RAT) (2G/3G/Long Term Evolution (LTE)). MLB allows cells suffering congestion to transfer load to other cells which have spare resources, and includes load reporting to exchange information about load level and available capacity. In case of inter-RAT MLB, a load reporting protocol may be used to transfer information between network nodes such as base stations of different radio access technologies, so that the capacities of the different technologies can be compared and weighed against each other. Specific examples of parameters to be optimised during MLB include primary CPICH power, and handover parameters.

MRO (Mobility Robustness Optimisation) is a solution for automatic detection and correction of errors in the mobility configuration, and is designed to optimise the handover parameters to reduce the Radio Link Failure (RLF) due to handover occurring too early, too late, to an incorrect cell, and due to the so-called "ping-pong effect". Specific examples of parameters to be optimised during MRO include cell individual offset (CIO), time to trigger (TTT), trigger thresholds, hysteresis value for ping-pong control, neighbour list relation, speed-dependent parameters, antenna RET, and idle mode parameters to avoid immediate HO trigger when transitioning from idle to active states.

Although conventional SON implementations may use the three key use cases, it is to be appreciated by the person skilled in the art that the SON functionality as described herein may include future SON functionality that includes other use cases yet to be considered by 3GPP, other use cases that are included in future standards related to SON functionality, and/or other non-standard or proprietary use cases.

A service optimisation (SO) and/or adaptation mechanism comprises computer implemented functionality for executing adaptive adjustment of one or more services provided over a telecommunications network to one or more UEs. For example, SO mechanisms can be configured to automatically and adaptively adjust the level of quality provided by a service to UEs and/or adjust the prioritisation of the delivery of one or more services provided to the UE.

For example, for a video streaming service the video SO mechanism may lower the resolution of a video being streamed by adjusting the resolution of the video from a very high resolution to a high resolution. This will improve the bandwidth consumed by the service and minimise the usage of network resources in streaming the video to one or more UEs. In another example, for a video streaming service the video SO mechanism may adjust the smoothness of playback by adjusting the frame rate, which may adjust the bandwidth. For example, reducing the frame rate may reduce bandwidth and reduce the smoothness of playback i.e. the video will be more "jerky". In another example, increasing the frame rate will consume more bandwidth but will also increase the smoothness of playback.

Although video streaming services are popular, other services may include streaming audio services (e.g. Spotify (RTM) or digital audio broadcast services) or web services (e.g. web browsing), or any other service associated with content or multimedia content or other content that may be adapted without affecting the delivery of the service. These other services may be adapted using SO adaptation, which may include by way of example only, but is not limited to, reducing the quality for streaming audio for reducing bandwidth, or reducing the resolution of images when web browsing (e.g. images in a web page) for reducing bandwidth, or reducing the quality of the content being delivered over the network to reduce the bandwidth or network resources used. The services that can be adapted include services in which the content can be changed without impacting the delivery of the service. Some services may not be able to be adapted, for example, services associated with downloading/uploading or storing exact copies of data such as documents (e.g. Word documents), archives (e.g..zip files), or other stored data.

In another example, the SO adaptation may prioritise one service over another service in order to improve the user experience in relation to the prioritised service. For example, the SO adaptation may prioritise delivery of video from a video streaming service over downloading a file from a download or cloud based service or web browsing service.

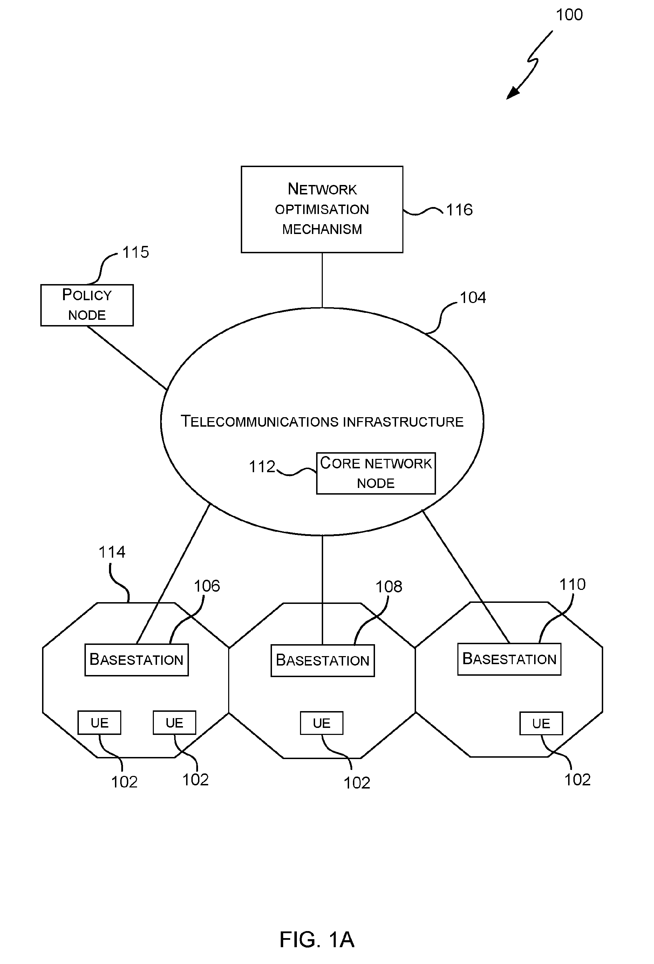

Figure 1a is a schematic diagram of a telecommunications network 100 comprising a plurality of user equipment devices (UEs) 102. The telecommunications network 100 comprises telecommunications infrastructure 104 and a plurality of communications network nodes 106, 108 and 110 connected by links. The links may be wired or wireless (for example, radio communications links, optical fibre, etc.). Telecommunications infrastructure 104 may include a core network including a core network node 112. The core network may be in communication with a radio access network including one or more network nodes 106, 108 and 110. Network nodes 106, 108 and 110 are illustrated as base stations (e.g. in an LTE network these may be eNBs) of a cellular telecommunications network. Each base station having a footprint indicated schematically in the figure as a hexagonal cell 114. UEs 102 are able to receive services from the telecommunications network 100 such as voice, video, audio and other services.

Telecommunications network 100 may comprise or represent any one or more communication network(s) used for communications between UEs 102 and other devices, content sources or servers that are connected to the telecommunications network 100. The telecommunication infrastructure 104 may also comprise or represent any one or more communication network(s), one or more network nodes, entities, elements, application servers, servers, base stations, policy nodes or other network devices that are linked, coupled or connected to form telecommunications network 100. The coupling or links between network nodes may be wired or wireless (for example, radio communications links, optical fibre, etc.). The telecommunication network 100 and telecommunication infrastructure 104 may include any suitable combination of core network(s) and radio access network(s) including network nodes or entities, base stations, access points, etc. that enable communications between the UEs 102, network nodes of the telecommunication network 100 and telecommunication infrastructure 104, content sources and/or other devices connecting to the network 100.

Examples of telecommunication network 100 that may be used in certain embodiments of the described apparatus, methods and systems may be at least one communication network or combination thereof including, but not limited to, one or more wired and/or wireless telecommunication network(s), one or more core network(s), one or more radio access network(s), one or more computer networks, one or more data communication network(s), the Internet, the telephone network, wireless network(s) such as the WiMAX, WLAN(s) based on, by way of example only, the IEEE 802.11 standards and/or Wi-Fi networks, or Internet Protocol (IP) networks, packet-switched networks or enhanced packet switched networks, IP Multimedia Subsystem (IMS) networks, or communications networks based on wireless, cellular or satellite technologies such as mobile networks, Global System for Mobile Communications (GSM), GPRS networks, Wideband Code Division Multiple Access (W-CDMA), CDMA2000 or Long Term Evolution (LTE)/LTE Advanced networks or any 2nd, 3rd or 4th Generation and beyond type communication networks.

The telecommunications network 100 comprises functionality to enable user experience policies and quality of service requirements for UEs 102 to be met by the network 100 in a more efficient manner. The policy network node 115 includes an input and storage unit for the inputting and storing user experience profiles, records or policy data. For example, policy network node 115 may store user experience policies for any one or more of: individual users, groups of users, specified types of services. A user experience policy for a service may comprise quality of service requirements such as thresholds, criteria or performance priorities that are to be met by the network 100 when providing the service to one or more users, as described in further detail below. The operator may configure the user experience policies to define what the network 100 should deliver to users using the service.

The functionality for enabling the user experience policies to be met by the network 100 may be implemented by a network optimisation mechanism (NOM) 116 in a centralised and/or distributed manner. In the example of Figure 1a, the functionality of the NOM 116 is implemented in a centralised manner. The NOM 116 may be computer-implemented using, for example, a computing device or server or a group of servers or computing devices. The NOM 116 may receive user experience policies distributed by the policy node 115 and the NOM 116 may receive user experience measurements from the network 100 or one or more network nodes 106-112 in the network 100. The user experience measurements are compared with the user experience policies to see if these are being met for users of the service, and if not, the NOM 116 automatically changes certain parameters and/or network nodes 106-112 of the network 100 until they are met. The NOM 116 may include or have access to one or more network performance mechanism(s) such as an RRM mechanism, SON mechanism, and/or SO mechanism. Typically in the centralised case, the NOM 116 may include or have access to the RRM, SON and SO mechanisms.

The NOM 116 may select one or more network performance mechanism(s) such as an RRM mechanism, SON mechanism, and/or SO mechanism and use one or more of these network performance mechanism(s) to adjust the network 100 to meet the user experience policies for the service. The NOM 116 continues to monitor the network 100 by comparing user experience measurements with the user experience policies and making any necessary adjustments to the network 100 to ensure the user experience policies are met.

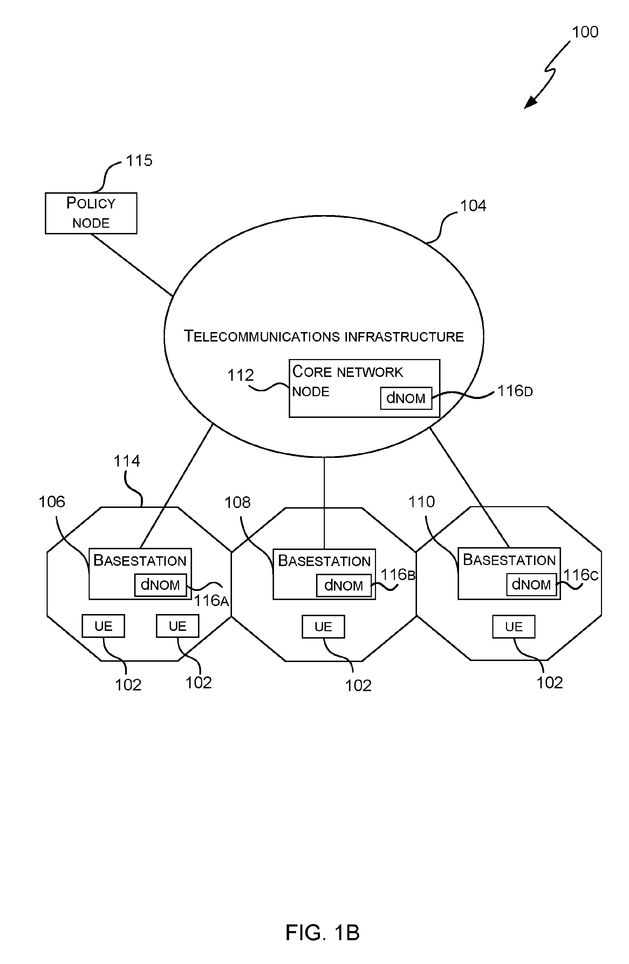

Figure 1b is a schematic diagram of the telecommunications network 100 of Figure 1a with distributed network optimisation functionality. For example, a local distributed NOM (d-NOM) component 116a-116d is present at base stations 106, 108 and 110 as well as core network node 112. Each local d-NOM 116a-116d in each network node 106-112 may include or have access to one or more network performance mechanism(s) (e.g. one or more of SON, RRM and/or SO) depending on the network performance mechanisms that are supported by the corresponding network node 106-112. As can be seen, the NOM functionality is distributed throughout the network 100. For example, the base stations 106, 108 and 110 may support various network performance mechanisms such as an RRM mechanism, a SON mechanism, and a SO mechanism, which means the local d-NOMs 116a-c may include or have access to the RRM, SON and SO mechanism implemented in those network nodes 106-110. In another example, the core network node 116 may also have at least a SON mechanism and SO mechanism, which means the local d-NOM 116d may include or have access to the SON and SO mechanism. In this scenario, the local NOM components 116a-116c in each of the base stations 106-110 or the local d-NOM component 116d in the core network node 112 may make user experience measurements associated with the service in relation to the UEs 102 using the service via the corresponding base station 102-108 or core network node 112.

Each local d-NOM component 116a-116d carries out an optimisation by retrieving user experience policies from policy network node 115 and compares these with the user experience measurements to control parameters of the corresponding base stations 106-110. For example, the local d-NOM components 116a-116d of the base stations 106-110 or core network node 112 may select one or more supported network performance mechanisms for carrying out an optimisation process of the corresponding base station 106-110 based on the comparison. Each local d-NOM component 116a-116d continues to monitor the network 100 by comparing user experience measurements with the user experience policies and making any necessary adjustments to the network 100 to ensure the user experience policies are met.

Although Figures 1a and 1b illustrate a centralised and distributed NOM functionality implemented as NOM 116 and d-NOM components 116a-116d, it is to be appreciated by the skilled person that the network 100 may implement a combination of the centralised and distributed approaches and include both NOM 116 and one or more d-NOM components 116a-116d.

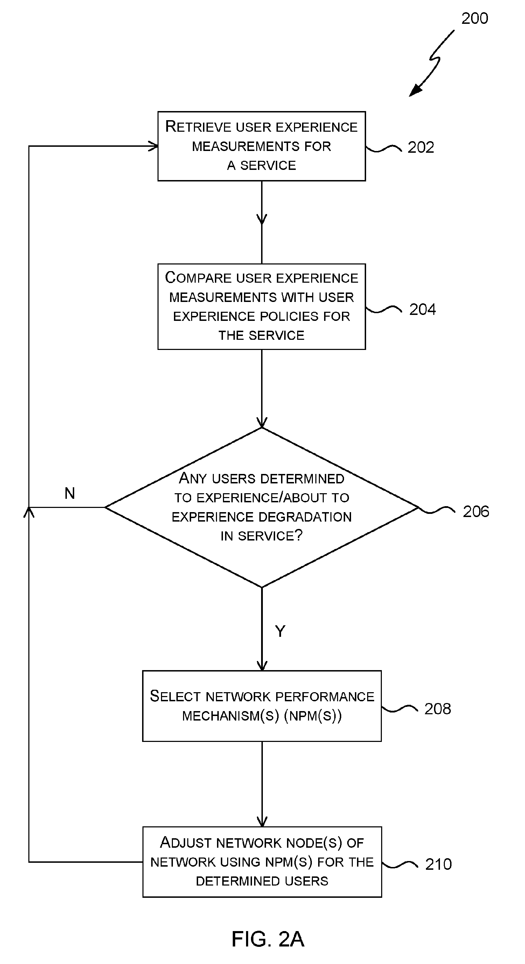

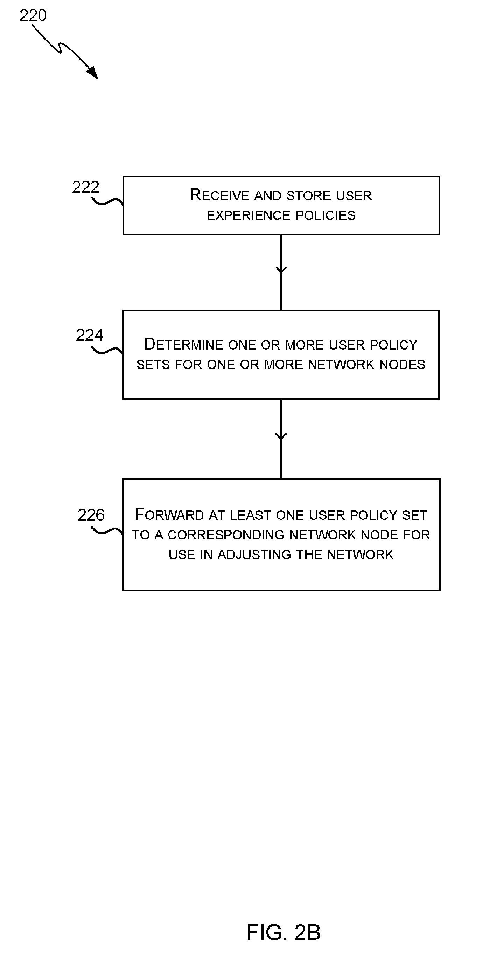

Figure 2a is a flow diagram of an example method 200 for controlling the performance of a telecommunications network, which may, by way of example only, be performed by NOM functionality 116 of figure 1a or by distributed NOM functionality or d-NOM components 116a-116d of figure 1b or the NOM functionality or other functions as described with reference to figures 2b-5. The user experience policies for a service may be retrieved from the policy node 115. The user experience measurements for a service (e.g. a content streaming service or other time critical service) are also retrieved at 202, for example, the user experience measurements may be received from one or more network nodes 106-112 of the network 100, or they may be measured locally and passed to the NOM 116 or d-NOM components 116a-116d.

At 204, a comparison is made between the user experience measurements and the user experience policies for the service. In 206, it is determined whether any users experience or are about to experience a degradation in the service. For example, a set of users may be determined to be or are about to experience a degradation in the service. If there are users, or the set of users is not null, then at 208 one or more network performance mechanisms are selected for use in optimising one or more network node(s) in the network based on the user experience polices and the user experience measurements.

At 210, the selected network performance mechanisms are used to adjust the network node(s) associated with the service and/or the determined users. For each network node or other network entity or element, the selected one or more network performance mechanisms may carry out an optimisation algorithm for achieving a higher network performance to attempt to meet the quality of service requirements specified in the user experience policies.

In 208, selecting the one or more network performance mechanisms may include selecting from at least one from the group of a RRM mechanism, a SON mechanism, and a SO mechanism. The network performance mechanisms may be selected based on an order of the complexity of the mechanism. For example, the RRM mechanism may be selected for the first attempt at optimising the network or one or more network nodes. If this does not yield enough of a performance improvement, then the SON mechanism may be selected for a second attempt at optimising the network, and in another attempt at optimising the network the SO mechanism may be selected to further optimise/adapt the service being delivered to the users over the network.

The user experience policies may be mapped by the policy node or another node into data representative of rules for use at 204 in the comparison and at 210 in the adjustment of at least one of the network nodes. For example, at 204 comparing the user experience measurements with user experience policies associated with users of the service may further include applying the user experience measurements for each user to the rules associated with the user experience policy to determine whether each user experiences degradation in the service.

At step 206, determining whether each user experiences degradation in the service may further include detecting whether each user is experiencing degradation in the service, and/or predicting whether each user will experience degradation in the service.

At step 208, selecting one or more network performance mechanisms may include determining the network performance mechanisms supported by said at least one network node, and selecting one or more supported network performance mechanisms for adjusting said at least one network node.

At steps 204-206, the comparing and determining may further include prioritizing the set of users based on the level of degradation experienced by each of the users in the set of users. At step 210 adjusting the network nodes may further include adjusting at least one network node based on the prioritized set of users. For example, prioritizing the set of users may further include determining the priority for each user in the set of users based on the user experience policies. In step 208, selecting the one or more network performance mechanisms further comprises selecting the one or more network performance mechanisms based on the prioritized set of users, and in 210, adjusting the at least one network node using the one or more selected network performance mechanisms based on the prioritized set of users.

Although various examples of the method for controlling the performance and/or optimisation of a telecommunications network has been described with reference to figure 2a, it is to be appreciated by the person skilled in the art that the above method may further include other related features or other functionality for controlling/managing,/optimising the telecommunications network as described with reference to figures 1a-1b and/or 2b-5.

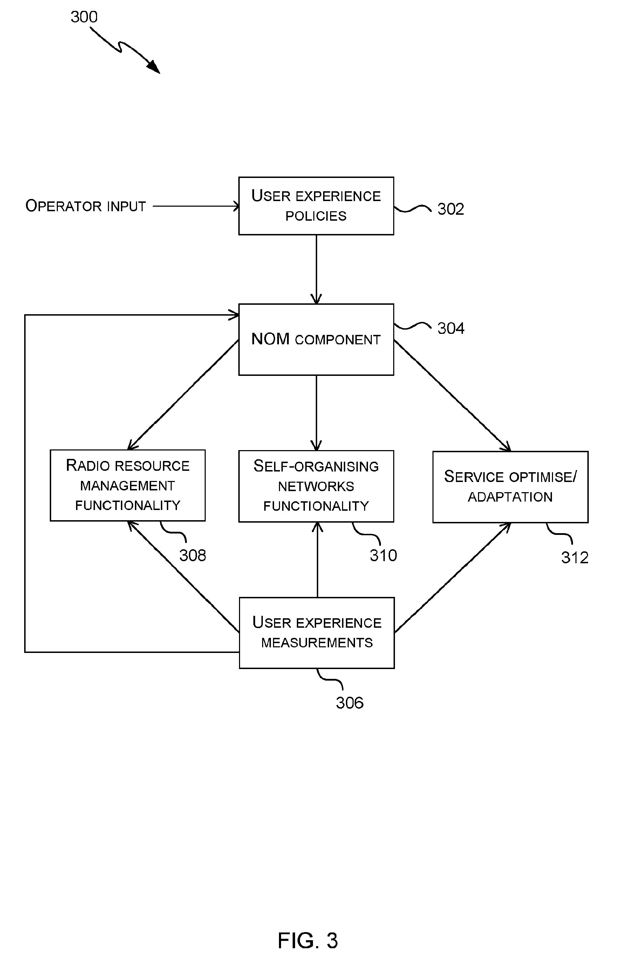

Figure 2b is a flow diagram of an example method 220 performed by a network node (e.g. a policy network node 115) that includes user experience policies and/or management functionality for managing and/or controlling distribution of the user experience policies for sending to network nodes and/or inputting to the centralised and/or distributed NOM functionality or d-NOM components 116 and 116a-116d of figures 1a-1b and/or the NOM functionality as described with reference to figures 3-5. The operator may input user experience policies into the network via the network node (e.g. a policy node 115).

At 222, the user experience policies associated with users of the service are received and stored in a storage unit associated with the network node (e.g. policy node 115).

At 224, one or more user experience policy sets are determined for use by one or more network nodes 106-112 in the network 100, where each policy set includes one or more policies from the user experience policies.

At 226, the network node (e.g. policy node 114), forwards at least one user experience policy set to at least one corresponding network node 106-112 for use by that network node 106-112 and the supported network performance mechanisms in adjusting said network node 106-112 and/or one or more other network nodes 106-112 of the network 100 based on user experience measurements associated with the user experience policy set.

In an example, determining the one or more user experience policy sets may further include interpreting each policy of the user experience policies to determine the network node(s) 106-112 to which said each policy is applicable; and mapping said each policy to a corresponding user experience policy set corresponding to the determined network node(s) 106-112.

In addition, by way of example, mapping said each policy may further include translating said each policy to data representative of network performance requirements associated with the determined network node(s) for use by determined network node(s) in applying said each policy; and storing in each policy set the translated policy.

In addition, by way of example only, the at least one corresponding network node may implement the method for controlling the performance of a telecommunication network as described, by way of example, with reference to Figures 1a-2a and 3-5 or as described herein. For example, the network node may use the received policy sets for use in adjusting, by one or more network performance mechanisms, network optimisation mechanisms, one or more network nodes 106-112 of the network 100 based on user experience measurements associated with the user experience policy set.

Although various examples of the method for managing and/or controlling distribution of user experience policies for optimisation of the network has been described with reference to figure 2b, it is to be appreciated by the person skilled in the art that the above method may further include other related features or other functionality for controlling/managing/distributing user experience policies and/or optimisation of the network as described with reference to figures 1a-2a and 3-5.

Figure 3 is a schematic diagram illustrating an example of a network optimisation mechanism 300 for optimising a telecommunications network in relation to a service being provided to users of the network according to the invention. An operator configures and inputs user experience policies 302 for each service for storage in a database or network node or other location suitable for storing the user experience policies for services provided to users over the telecommunication network. The user experience policies 302 may be input by the operator in the form of high-level policies expressed in terms of user experience that should be met by the network (rather than traditional network key performance indicators such as throughput and dropped calls). The user experience policies 302 define at a high level what the telecommunication network should deliver in relation to the service(s) provided to users of the network.

The telecommunications network includes the functionality of a NOM component 304, the functionality of which may be centralised within the telecommunications network and/or distributed throughout the telecommunications network. The telecommunications network also includes functionality to make user experience measurements 306 in relation to a service being provided to each user. The telecommunications network also includes functionality for optimising the network in the form of network performance mechanisms such as RRM functionality 308, SON functionality 310, and Service optimisation (SO)/adaptation functionality 312, each of which may have centralised functionality and/or distributed functionality within the network.

For each service or type of service (e.g. a content streaming service such as video streaming or audio streaming) that is being provided to users over the telecommunication network, the NOM component 304 may be configured to retrieve/receive user experience policies 302 that have been input by the operator, and also retrieves/receives user experience measurements 306 fed back to the NOM component 304 that have been made in relation to the service being provided over the network to each user.

The NOM component 304 may also be configured to perform automatic translation of the user experience policies to allow the user experience measurements to be compared with the user experience policies and to enable the user experience policies and/or the user experience measurements to be input to selected combinations of the network optimisation mechanism(s) (e.g. centralised and/or distributed NOM functionality) for use in optimising the network based on the user experience measurements and user experience policies.

In addition, by way of example only, the NOM component 304 (or even a policy node) may perform mapping of translation of the user experience policies into a form that allows comparison with the user experience measurements to determine for which users of the service and where the network may not be meeting the expected user experience policies. As another example, translation of the user experience policies, which are typically high-level policies, may include mapping one or more sets of policies from the user experience policies for input to network performance mechanisms such as SON 310, RRM 308, and/or SO 312 via NOM 304 or to another NOM (e.g. d-NOM components not shown) that include or have access to network performance mechanisms (e.g. RRM 308, SON 310 and/or SO 312). For example, in a list of 10 user experience policies, 5 may be sent to SON 310 in an eNB, 2 to SON 310 in the core network, and 3 may be sent to both SON 312 and RRM 308 and/or SO 312 in an eNB. Alternatively, these sets of user experience policies may be sent to a d-NOM component in a network node supporting one or more network performance mechanism(s) e.g. an eNB or core network node etc.

When the sets of policies are sent to the each network node, other NOM component, and/or network performance mechanism an indicator may be included on whether that node, NOM component and/or network performance mechanism is the sole recipient of that policy, or whether other network nodes, other NOM(s), network performance mechanisms are also implementing that policy. This is to allow some coordination between the different parts of the network such that the performance of the network may be optimised efficiently. For example, if multiple network performance mechanisms are aiming to implement the same policy, then this may impact their behaviour when optimising the performance of the network for users of the service in which the user experience policies are not being met. This may result in the network performance mechanisms optimising the network or network nodes (e.g. adapting parameters of network nodes etc.) serially in order to determine the impact that each network performance mechanism has had on the network prior to the next network performance mechanism performing its optimisation. Of course, network performance mechanisms that aim to implement different policies or network performance mechanisms that do not directly affect each other but implement the same policies may perform their optimisation either serially or in parallel.

The user experience policies can be translated or mapped from high level user experience policies to data representative of rules, conditions, criteria, performance parameters and thresholds suitable for applying to user experience measurements for comparing or determining whether the network meets the user experience policies based on the user experience measurements. The user experience policies can also be translated or mapped from high level user experience policies to data representative of rules, conditions, criteria, performance parameters and thresholds suitable for input to the one or more network performance mechanisms.

For example, for a content streaming service, a user experience policy associated with or driven by one or more policies on content stalls may be translated or mapped for input to the SON functionality 310 as, by way of example only but not limited to, data representative of performing load balancing to improve throughput of those users experiencing stalls. In another example for the content streaming service, the user experience policy associated with or driven by content stalls may also be translated or mapped for input to the RRM functionality 308 as, by way of example only but not limited to, data representative of performing quality of service based scheduling that increases resources allocated to users that are experiencing or are close to experiencing a content stall. In a further example for the content streaming service, the user experience policy associated with or driven by policies on content quality or quality of service may be translated or mapped for input to the SO functionality 312 as, by way of example only but not limited to, data representative of reducing the quality of the content item being streamed e.g. lowering the resolution of video users with very high resolution to high or even lower resolutions, which should improve the experience of users experiencing bad quality.

Although the user experience policies have been described with respect to, by way of example only but not limited to, a content streaming service (e.g. video/audio streaming), it is to be appreciated by the skilled person that the present invention or that the user experience policies can relate to services other than content streaming, e.g. other time critical services, real-time services, and/or services requiring high network performance. In addition, user experience policies may be defined separately for different services, but the same functionality and mechanisms as described herein, e.g. the NOMs component functionality, network performance mechanism functionality, user experience measurement functionality etc., may be applied to implement the user experience policies and ensure the network meets the corresponding policies for each service provided to users.

Although the user experience policies have been described as taking into account or being driven by the functionality of the network performance mechanisms such as RRM functionality 308, SON functionality 310, and SO functionality 312, it is to be appreciated by the skilled person that the user experience policies may also include policies associated with other aspects associated with network or UE performance, for example, energy saving aspects of the network and/or UEs of users.

The NOM component 304 may also select one or more or a combination of one or more network performance mechanisms based on the user experience measurements 306 and user experience policies 302. The NOM component 304 may also be configured to provide the network performance mechanisms with data representative of the user experience policies 302 and/or user experience measurements 306. For example, the NOM component 304 may be configured to perform automatic translation or mapping of the user experience policies and/or measurements to enable the user experience measurements and/or the user experience policies to be input to the selected combinations of the network optimisation mechanism(s), which use this input for optimising the network based on the user experience measurements and user experience policies. The network performance mechanisms may include a one or more of or a combination of RRM functionality 308, SON functionality 310 and SO functionality 312.

For example, data representative of the user experience policies 302 and/or user experience measurements 306 can be input to and applied by the SON functionality 312, which may, by way of example only, apply load balancing with the aim of optimising service user experience (e.g. video or audio user experience). Alternatively or additionally, the data representative of the user experience policies 302 and/or user experience measurements 306 can be input to and applied by the RRM functionality 308, which may, by way of example only, schedule resources to minimise the number of users experiencing or about to experience degradation of the service, e.g. schedule more resources to users with high risk of video stall. Alternatively or additionally, the data representative of the user experience policies 302 and/or user experience measurements 306 can be input to and applied by the SO/adaptation functionality (e.g. video rate adaptation), which may, by way of example reduce the quality of the service being provided to users, e.g. lowering resolution of the video or removing frames for high definition users.

The NOM component functionality 304 may prioritise the order of applying a combination of network performance mechanisms depending on the success of the previous network performance mechanism in optimising the network such that the user experience policies are met for the service provided to the users. For example, the NOM component functionality 304 may first apply the RRM functionality 308 to optimise the network based on the user experience policies and/or the user experience measurements for the service for a set of users. After subsequent user equipment measurements have been made and retrieved, if it is detected that the network still does not meet the user experience policies for the service for one or more users in the set of users, then the NOMs component functionality 304 may apply the SON functionality 310 to optimise the network based on the user experience policies and/or the user experience measurements. After further subsequent user equipment measurements have been made and retrieved for users of the service, if it is detected that the network still does not meet the user experience policies for the service for one or more users of the set of users, then the NOMs component functionality may apply the SO functionality 312 to optimise the service provided to the one or more users of the set of users that are measured to still be experiencing a poor user experience.

Of course, the NOMs component functionality 304 continues to monitor the network and retrieve feedback of user experience measurements from the network, determine the users of the service provided over that network that is not meeting the user experience policies, apply these to the user experience policies and select the one or more of or a combination of network performance mechanisms to optimise the network in relation to the service and the determined users.

Additionally, the NOM component functionality 304 may further indicate or be used to provide input to the requirements for network expansion. For example, the NOM component functionality 304 could indicate in which locations new base stations or network nodes are needed to meet the requirements defined by the user experience policies for each service.

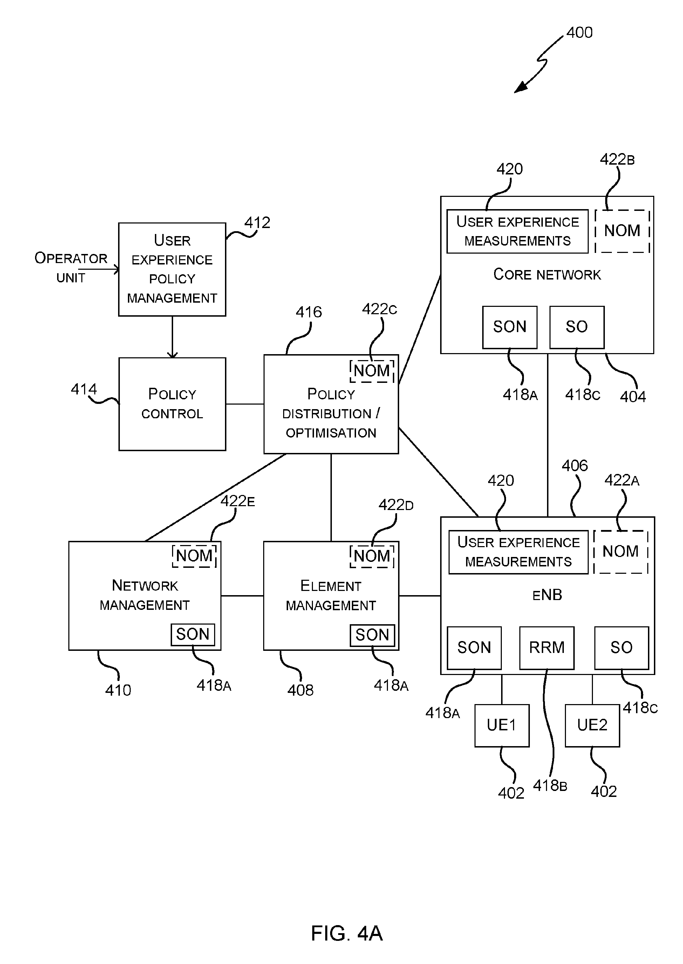

Figure 4a is schematic diagram of another example telecommunications network 400 comprising telecommunications infrastructure and a plurality of UEs 402 in which the telecommunications network 400 is configured to implement network optimisation mechanism (NOM) functionality as described with reference to figures 1a-3.

The telecommunications infrastructure includes core network 404 and a plurality of network nodes connected by links, which may be wired or wireless (for example, radio communications links, optical fibre, etc.). The network nodes include base station 406 (e.g. an eNB), element management node 408, network management node 410, user experience policy management function 412, policy control function 414 and policy distribution and optimisation function 416. The plurality of UEs 402 access the telecommunications network 400 via base station 406 and are able to access one or more service(s) over the telecommunications network 400 such as voice, video, audio, content streaming and other services.

In this example, the base station 406 includes network performance mechanism functionality such as RRM functionality 418b, SON functionality 418a, and SO functionality 418c and functionality for making user experience measurements 420.

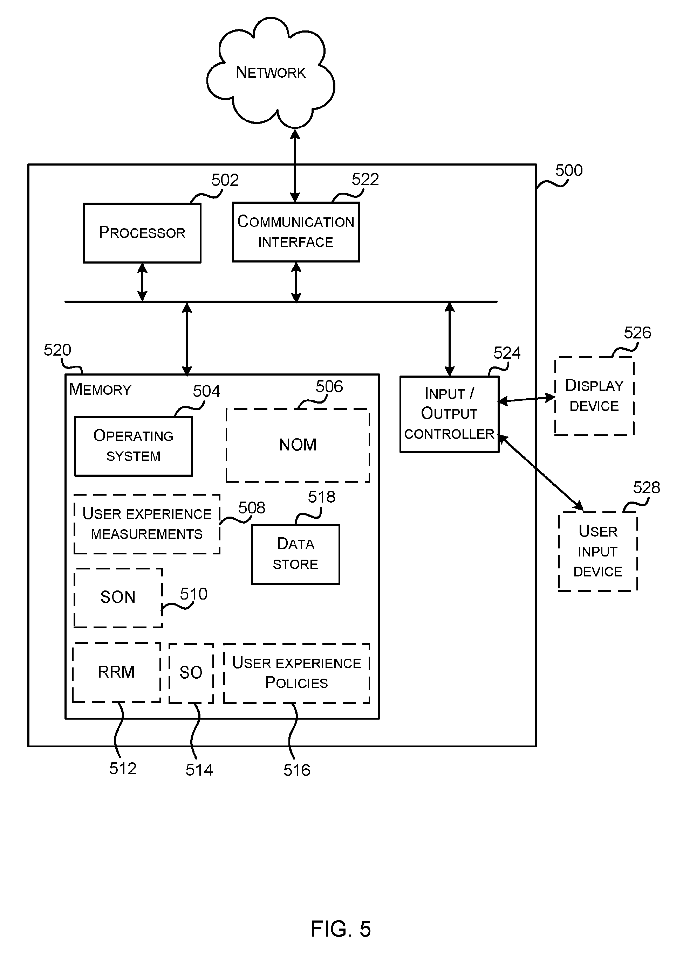

The base station 406, network manager node 410, element manager node 408, and core network 404 include network performance mechanism functionality such as SON functionality 418a. Although each of these nodes may implement SON functionality, it is to be appreciated by the skilled person that the SON features do not need to be the same; in fact, different SON features may be implemented in different network nodes and elements. The Service Optimisation and adaptation mechanism or functionality (e.g. video or audio optimisation) may be implemented in the core network 404 or within the base station 406 (e.g. eNB). Figure 5 illustrates a computing device 500 that may be used to implement one or more of the network nodes 404-412, user experience policy management 412, policy control 414, and policy distribution and optimisation 416 as described herein.

As an option, base station 404, core network 404, element management node 408, network management node 410, and policy distribution and optimisation node 416 may each optionally include a network optimisation mechanism (NOM) components 422a-422e, respectively. This may depend on whether the NOM functionality of the telecommunications network 400 is implemented in a centralised or distributed manner or a combination of both.

As previously described, the NOM functionality may be implemented in telecommunication network 400 in a centralised manner or in a distributed manner, or a combination of centralised/distributed manners (e.g. a hybrid manner) depending on the size of the network. For example, the NOM functionality may be implemented in a centralised manner in policy distribution/optimisation node 416 via NOM component 422c or a core network node of the core network 404 via NOM component 422. Alternatively or additionally, the NOM functionality may be implemented in a distributed manner in which one or more network nodes in the telecommunication network 400. For example, base station 404, a network node in the core network 404, element management node 408, network management node 410, and/or policy distribution and optimisation node 416 may optionally include a NOM component 422a-422e.

The user experience policy management node 412, policy control node 414 and policy distribution/optimisation node 416 may be implemented separately, but may interface with other network nodes e.g. the policy distribution/optimisation node 416 may interface with network nodes 406, 408 and 410 and network nodes or elements in the core network 404.

Although the user experience policy management node 412, policy control node 414 and policy distribution/optimisation node 416 is described as being implemented separately, it is to be appreciated by the person skilled in the art that the functions or a combination of the functions of the user experience policy management node 412, policy control node 414 and/or policy distribution/optimisation node 416 may be implemented together or in the same network node, for example but not limited to, a policy network node 115 or other functionality for controlling/managing user experience policies and/or optimisation of the network as also described with reference to figures 1a-3 and 5.

User experience policy management node 412 includes a user interface for managing operator input of user experience policies. The policy control functionality or node 414 may be configured to process the user experience policies and automatically translate them into a format that can be used in the NOM functionality of the telecommunication network 400. Further tasks mat be to ensure that no user experience policies conflict with each other.

The policy distribution and optimisation function 414 may be configured to receive the data representative of the user experience policies from the policy control node 414 and uses this data for implementing the NOM functionality of telecommunications network 400. In one implementation, the NOM functionality of the telecommunications network 400 may be implemented in a distributed manner such that the policy distribution and optimisation node 416 is configured to determine where in the network 400 each user experience policy should be applied and to distribute the user experience policies accordingly, such that the NOM functionality 422a-4212b and 422d-422e of the network nodes 404-410 is able to receive the relevant user experience policies for implementing their NOM functions. Of course, those network nodes 408 and 410 that do not make user experience measurements, may also receive or retrieve the user equipment measurements from one or more other network nodes 406 or 404 that include such functionality.

In another implementation, since the policy distribution and optimisation node 416 may be configured to implement the NOM functionality 422c in a centralised manner, in which case the node 416 may receive or retrieve user equipment measurements from the base station 406 and/or core network 404 and use the user experience policy and user equipment measurements to determine which users and where in the network 400 should be optimised and to instruct the network performance mechanisms 418a, 418b and 418c of the network nodes 404-410 to optimise the network 400 accordingly as has been described with reference to figures 1a-3.

The following example implementation refers to the telecommunication network 400 of figure 4a in which it is assumed that the service is a content streaming service, in particular, a video streaming service. Although the following description makes reference to, by way of example only, a video streaming service, it is to be appreciated by the skilled person that this example implementation is applicable to any other service that requires the network 400 meet the corresponding user experience policies.

The operator of the network 400 has input via user experience policy management 412 a number of user experience policies associated with video streaming user experience. These are translated/processed by policy control node 414 and distributed by policy distribution node 416 to the required network nodes 404-408. In this example, it is assumed that the NOM functionality is distributed within network 400, which will be described, by way of example and for simplicity, from the perspective of the base station 406. It is assumed that NOM component functionality 422a, RRM functionality 418a, SON functionality 418b and SO functionality 418c (e.g. video optimisation) are all implemented in the base station 406 (e.g. eNB). It is to be appreciated that a similar approach can be made for other network nodes and implementations, e.g. core network 404 may be similarly implemented.

In order to address any user experience issues regarding the video streaming service, the NOM functionality 422a of network 400 retrieves or receives user experience measurements 420 and/or relevant user experience policies from policy distribution node 416 for use in determining whether a bad video user experience for one or more users is detected or predicted. A bad video user experience for a user may be determined by applying the user experience policies for the video streaming service to the user experience measurements to determine whether the network 400 is meeting the user experience policies for the users, and if not, determining the users that are affected. The users that are affected are determined to be experiencing or will experience bad video user experience. If a bad video user experience is detected for a user, then this means that that user is currently experiencing a degraded service due to poor network performance (e.g. that video stalls are occurring). If a bad video user experience is predicted for a user, then this means that that user is most likely going to be experiencing a degraded service due to a predicted upcoming interruption or degradation in network performance (e.g. a video stall may be close to occurring - the video buffer may nearly be empty or application signalling in the network may indicate a stall is imminent (e.g. deep packet inspection may be used, or the UE of the user may shortly handover etc.).

After detecting or predicting a bad video user experience for one or more affected users of the video streaming service, if there is more than one affected user with video user experience issues, then the NOMs functionality 422a ranks the affected users according to priority. These priorities will be used in the case where it is not possible to address the video user experience issues of all affected users. For example, if only one affected user can be assisted, it will be the user with the highest priority. The priority for each affected user may be determined based on the user experience policies, which may define a policy associated with prioritizing which users the network 400 should be optimised for.

The NOM functionality 422b then selects one or more or a combination of network performance mechanisms for implementing the performance optimisation of the network 400 for the affected users. In this example, the base station 406 supports RRM functionality 418b, SON functionality 418a, and SO functionality 418c which means that the NOM functionality 422b may select and apply one or more of SON, RRM and/or SO functionalities 418a-418c. If more than two are available, the NOM functionality 422b may select several network performance mechanism functionalities and apply them. Although the different network performance mechanisms may be applied simultaneously, this may result in the network performance mechanisms working against each other such that network performance may suffer further performance losses. The issue is that having multiple mechanisms in parallel adds significant complexity in making the mechanisms work well. For example, in the eNB network node 406, if SON 418a and RRM 418b are operating in parallel, one could be improving user experience while the other may be degrading it. If the overall effect is that user experience is improving, this may not be noticed, but it may also mean that the network performance might not be optimal such that further performance gains may not be realised. Thus, it may be simpler and more optimal to apply the network performance mechanisms separately and/or in an ordered, coordinated or prioritized sequential manner.

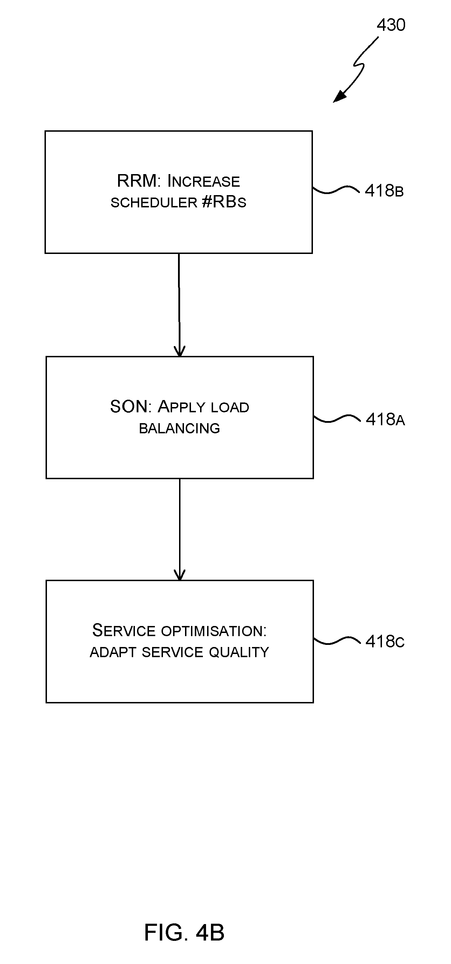

Figure 4b illustrates an example of coordinating the optimisation of the network 400 using a sequential ordering 430 for use by the NOM functionality 422a to select and apply the network performance mechanisms in a particular order. In this example, the NOM functionality may select SON, RRM and SO functionalities 418a-418c and apply them in the particular order of RRM 418b, then SON 418a, then SO 418c. Each network performance mechanism optimisation is performed sequentially e.g. a) first apply RRM 418b based on user experience measurements and/or user experience policies; b) if one or more users still affected, then apply SON 418a based on further user experience measurements; and c) if one or more users still affected then apply SO 418c based on a further set of user experience measurements.

The sequential order of applying the network performance mechanisms as illustrated in figure 4b provides the advantage that the simplest network performance mechanism is applied first, i.e. the RRM and network resources are the easiest to change first, then the SON is attempted, which is more complex, and finally SO is performed, which has an impact on quality of the service. However, it is to be appreciated by the person skilled in the art that, depending on the reason for the video stalls or degradation in service experienced by affected user(s) and the overall network behaviour, other sequential orders of RRM functionality 418b, SON functionality 418a, and SO functionality 418c may be more applicable.

Referring back to figure 4a, as described with reference to figure 4b, the NOM functionality 422a selects RRM functionality 418b for addressing user experience issues by, among other things, scheduling network resources to the affected user. For example, affected users that need additional network resources are scheduled extra resources. If multiple users require extra network resources, then priorities may be applied to allocate extra resources to affected users with higher priorities first before allocating resources to lower priority users.

The NOM functionality 422a then retrieves/receives further user experience measurements to determine whether RRM optimisation solved the user experience issues. If RRM optimisation, (e.g. scheduling extra resources to affected users), did not solve the problems associated with one or more of the affected users, or does not solve the problem for all affected users, then NOMs functionality 422a selects and applies the SON functionality 418a. For example, the SON functionality may be used to perform, by way of example only but not limited to, load balancing based on the user experience policies and/or user experience measurements. Other examples of SON functionality are coverage and capacity optimisation, and mobility robustness optimisation. Load balancing may be used to move affected users, i.e. users with user experience issues, to another cell with a lower load, thus those affected users that are moved should receive improved network performance. As well, the load in the current cell will then reduce such that those affected users that are not moved to another cell, should receive improved network performance due to the lower loading. If there are multiple affected users with user experience issues, then priorities based on user experience policies can be applied to determine which users the network 400 will be optimised over.

The NOM functionality 422a then retrieves/receives further user experience measurements to determine whether SON optimisation solved the user experience issues. If SON optimisation (e.g. load balancing) did not solve the problem, or does not solve the problem for all affected users, then NOM functionality 422a selects and applies the SO functionality 418c (e.g. video optimisation). Of course various video optimisations may be performed as previously described, for example, reducing the resolution of the video for affected users with user experience issues. The video optimisation may also take into account user experience policies associated with SO, e.g. policies on video resolution may include reducing video resolution unless this has a bigger user experience impact than stalling, if it does, then allow stalling to occur instead of reducing video resolution, otherwise reduce video resolution. Another policy may be to reduce video resolution for both users that are and are not affected, while still ensuring the user experience policies for the network 400 are met. As described previously, alternative approaches may be to reduce the frame rate of the video.

User experience measurements are used to provide feedback to the NOM functionality 422a to ensure that the user experience is being improved, and that the network 400 is delivering services that meet the user experience policies. These user experience measurements will be provided as input to the RRM functionality 418b, SON functionality 418a, and SO functionality 418c and user experience policy functions. As well, by performing user experience measurements for a service and applying or comparing these to the user experience policies of the service, then this ensures that user experience for one user does not degrade the user experience for other users in the network 400.

The following are examples of determining priorities when multiple users have user experience issues using a video streaming service. For example, a user experience policy for prioritising users may be based on determining if two users are close to experiencing a stall, and if one user has already experienced one stall, then prioritise that user to avoid that user experiencing another stall. This policy would apply if the user experience is particularly badly impacted by experiencing more than one stall. In another example, the opposite may be true, and the user experience policy may aim to prioritise users by ensuring that if one user has had no stalls, then this should remain the case, i.e. prioritise the user that has not experienced a stall yet, but may do in the future. This user experience policy would apply if the affected user that has experienced a stall is already unhappy then they are expecting to experience another stall, so actually experiencing a second video stall does not make much difference to that user's experience. Which of these two options should be chosen is therefore determined by user experience policy, which is also based on insights on user behaviour.

Figure 5 illustrates various components of an exemplary computing-based device 500 which may be implemented as any form of a computing and/or electronic device, and in which embodiments of the network optimisation mechanisms and/or functionality, network performance mechanisms and/or functionality, and other aspects as described herein may be implemented.

Computing-based device 500 comprises one or more processors 502 which may be microprocessors, controllers or any other suitable type of processors for processing computer executable instructions to control the operation of the device in order to receive user experience policies and measurements from the network and select and apply network performance mechanisms for optimising the performance parameters and/or performance of the telecommunications network to ensure the telecommunications network meets the user experience policies for a service used by users over the telecommunications network.

In some examples, for example where a system on a chip architecture is used, the processors 502 may include one or more fixed function blocks (also referred to as accelerators) which implement a part of the method of figure 2 or the methods as described herein in hardware (rather than software or firmware).

Platform software and/or computer executable instructions comprising an operating system 504 or any other suitable platform software may be provided at the computing-based device to enable application software to be executed on the device. Depending on the functionality and capabilities of the computing device 500 and application of the computing device, software and/or computer executable instructions may optionally (as illustrated by the dashed boxes) include, and as described with reference to figures 1a-4b, one or more of a network optimisation mechanism or functionality 506, user experience measurement functionality 508, SON functionality or mechanism 510, RRM functionality or mechanism 512, SO functionality or mechanism 512, and/or user experience policies functionality or management 516 may be provided at the computing-based device and data store 518 may hold user experience policies, user experience measurements, telecommunications network parameters, network performance data, service quality indicators or other data.

For example, computing device 500 may be used to implement base station 406 and may include software and/or computer executable instructions that may include user experience measurement functionality 508, SON functionality or mechanism 510, RRM functionality or mechanism 512, and SO functionality or mechanism 512. Optionally, base station 406 may also include network optimisation mechanism or functionality 506 and/or user experience policies functionality or management 516. In another example, computing device 500 may be used to implement a network node in core network 404 and may include software and/or computer executable instructions that may include user experience measurement functionality 508, SON functionality or mechanism 510 and SO functionality or mechanism

512. Optionally, network node of core network 404 may also include network optimisation mechanism or functionality 506 and/or user experience policies functionality or management 516. In another example, computing device 500 may be used to implement policy distribution and optimisation node 416 and/or user experience policy management 412 and/or policy control 414 and may include software and/or computer executable instructions that may include user experience policies functionality or management 516. Optionally, policy distribution and optimisation node 416 may also include network optimisation mechanism or functionality 506.

The software and/or computer executable instructions may be provided using any computer-readable media that is accessible by computing based device 500. Computer-readable media may include, for example, computer storage media such as memory 520 and communications media. Computer storage media, such as memory 520, includes volatile and non-volatile, removable and non-removable media implemented in any method or technology for storage of information such as computer readable instructions, data structures, program modules or other data.

Computer storage media may include, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 520) is shown within the computing-based device 500 it will be appreciated that the storage may be distributed or located remotely and accessed via a network or other communication link (e.g. using communication interface 522).

The computing-based device 500 may also optionally or if desired comprises an input/output controller 524 arranged to output display information to a display device 526 which may be separate from or integral to the computing-based device 500. The display information may provide a graphical user interface. The input/output controller 524 is also arranged to receive and process input from one or more devices, such as a user input device 528 (e.g. a mouse or a keyboard). This user input may be used to set thresholds or criteria, configure optimisation algorithms, and view optimisation results. In an embodiment the display device 526 may also act as the user input device 528 if it is a touch sensitive display device. The input/output controller 524 may also output data to devices other than the display device, e.g. a locally connected printing device.

The term 'computer' is used herein to refer to any device with processing capability such that it can execute instructions. Those skilled in the art will realise that such processing capabilities are incorporated into many different devices and therefore the term 'computer' includes PCs, servers, network nodes and other network elements, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A method for controlling the performance of a telecommunication network, the telecommunication network comprising a plurality of network nodes and a plurality of user equipment, UE, associated with users using a service over the telecommunication network, the method comprising:
retrieving user experience measurements associated with users of the service from one or more network nodes;
comparing the user experience measurements with user experience policies associated with users of the service to determine a set of users experiencing a degradation in the service;
selecting one or more network performance mechanisms for adjusting at least one network node associated with providing said service to at least one user of the set of users; and
adjusting said at least one network node using the one or more selected network performance mechanisms based on the user experience policies, the user experience measurements and the degradation in the service for said at least one user.

2. A method as claimed in claim 1, further comprising, selecting the one or more network performance mechanisms from at least one from the group of:
a radio resource management, RRM, mechanism;
a self-organising network, SON, mechanism; and
a service optimization, SO, mechanism associated with the service.

3. A method as claimed in claims 1 or 2, further comprising retrieving data representative of at least one user experience policy associated with at least one user of the telecommunication network.

4. A method as claimed in any preceding claim, further comprising mapping the user experience policies for each user into data representative of rules for use in the comparison and adjustment of the at least one network node.

5. A method as claimed in claim 4, wherein comparing the user experience measurements with user experience policies associated with users of the service further comprises applying the user experience measurements for each user to the rules associated with the user experience policy to determine whether each user experiences degradation in the service.

6. A method as claimed in any preceding claim, wherein determining whether a user experiences a degradation in the service further comprises at least one from the group of:
detecting whether the user is experiencing a degradation in the service; and
predicting whether the user will experience degradation in the service.

7. A method as claimed in any preceding claim, the step of selecting one or more network performance mechanisms further comprising:
determining the network performance mechanisms supported by said at least one network node; and
selecting one or more supported network performance mechanisms for adjusting said at least one network node.

8. A method as claimed in any preceding claims, wherein the at least one network node includes a base station node supporting at least one network performance mechanism from the group of:
a RRM mechanism;
a SON mechanism; and
a SO mechanism associated with the service; and
wherein the steps of selecting and adjusting the at least one network node further comprising:
selecting the RRM mechanism for adjusting the at least one network node;
selecting the SON mechanism after adjusting the at least one network node based on the RRM mechanism, for further adjusting the at least one network node; and
selecting the SO mechanism after further adjusting the at least one network node.

9. A method as claimed in any preceding claim, wherein the at least one network node includes a core network node supporting at least one network performance mechanism of a SON mechanism and a SO mechanism associated with the service, and wherein the steps of selecting and adjusting the at least one network node further comprises selecting the SON mechanism for adjusting the at least one network node, and selecting the SO mechanism after using the SON mechanism for adjusting the at least one network node.

10. A method as claimed in any preceding claim, wherein the at least one network node includes a set of network nodes associated with providing the service to the set of users, wherein the set of network nodes are adjusted according to the one or more network performance mechanisms, the user experience policies, and user experience measurements.

11. A method as claimed in any preceding claim, wherein the step of comparing further comprises prioritizing the set of users based on the level of degradation experienced by each of the users in the set of users; and the step of adjusting further comprises adjusting at least one network node based on the prioritized set of users.

12. A method as claimed in claim 11, wherein prioritizing the set of users further comprises determining the priority for each user in the set of users based on the user experience policies.

13. A method as claimed in claims 11 or 12, wherein selecting the one or more network performance mechanisms further comprises selecting the one or more network performance mechanisms based on the prioritized set of users.

14. A method as claimed in any of claims 11 or 12, wherein adjusting the at least one network node further comprises adjusting the at least one network node using the one or more selected network performance mechanisms based on the prioritized set of users.

15. A method for managing and controlling the performance of a telecommunication network, the telecommunication network comprising a plurality of network nodes and a plurality of user equipment, UE, associated with users using a service over the telecommunication network, the method comprising:
receiving and storing user experience policies associated with users of the service;
determining one or more user experience policy sets for use by one or more network nodes, wherein each policy set comprises one or more policies from the user experience policies; and
forwarding at least one each user experience policy set to at least one corresponding network node for use in adjusting, by one or more network performance mechanisms, one or more network nodes of the network based on user experience measurements associated with the user experience policy set.

16. A method as claimed in claim 15, wherein determining the one or more user experience policy sets further comprises:
interpreting each policy of the user experience policies to determine the network node(s) to which said each policy is applicable; and
mapping said each policy to a corresponding user experience policy set corresponding to the determined network node(s).

17. A method as claimed in claim 16, wherein mapping said each policy further includes:
translating said each policy to data representative of network performance requirements associated with the determined network node(s) for use by determined network node(s) in applying said each policy; and
storing in each policy set the translated policy.

18. A method as claimed in any one of claims 15 to 17, wherein the said at least one corresponding network node implements the method according to any of claims 1 to 14 for use in adjusting, by one or more network performance mechanisms, one or more network nodes of the network based on user experience measurements associated with the user experience policy set.

19. Computer readable medium comprising program code stored thereon, which when executed on a processor, causes the processor to perform a method according to any one of claims 1 to 18.

20. A policy node comprising a processor unit, a storage unit, a receiver and transmitter unit, the processor unit coupled to the storage unit, receiver and transmitter units, wherein the processor unit, storage unit, receiver and transmitter units are configured to perform the method as claimed in any one of claims 1 to 18.

21. A network node comprising a processor unit, a storage unit, a receiver and transmitter unit, the processor unit coupled to the storage unit, receiver and transmitter units, wherein the processor unit, storage unit, receiver and transmitter units are configured to perform the method as claimed in any one of claims 1 to 18.

22. A telecommunications network comprising a network node as claimed in claim 21.

23. A telecommunications network as claimed in claim 22 further comprising a policy node as claimed in claim 20.
